# EUROPÄISCHE PATENTSCHRIFT

(11) **EP 1 101 570 B1**
(45) Veröffentlichungstag und Bekanntmachung des Hinweises auf die Patenterteilung: **13.02.2008**
(21) Anmeldenummer: 00811050.4
(22) Anmeldetag: 08.11.2000
(51) Int. Cl.: B25D 16/00, B25D 11/06

(54) **Bohr- und Meisselgerät**
Drilling- and percussion device
Appareil de forage et de percussion

(30) Priorität: 18.11.1999 DE 19955412
(43) Veröffentlichungstag der Anmeldung: 23.05.2001
(73) Patentinhaber: HILTI Aktiengesellschaft, 9494 Schaan (LI)
(72) Erfinder: Below, Armin, 86916 Kaufering (DE); Bongers, Hans-Werner, 81477 München (DE); Richter, Martin, 85354 Freising (DE); Hofbrucker, Thomas, 82291 Mammendorf (DE); Karlsson, Kent, 82343 Pöcking (DE)
(74) Vertreter: Wildi, Roland

(56) Entgegenhaltungen:
- DE-A- 3 322 963
- DE-U- 9 307 523

## Beschreibung

Die Erfindung betrifft ein Bohr- und Meisselgerät gemäss dem Oberbegriff des Patentanspruchs 1.

Zum Bearbeiten von Beton, Gestein, Mauerwerk oder dergleichen Material ist aus der DE-33 22 963 ein Bohr- und Meisselgerät mit einer von einem Antriebsmotor angetriebenen Antriebsspindel für ein Bohr- und Meisselwerkzeug sowie ein mit der Antriebsspindel in Verbindung stehendes Schlagwerk bekannt, das durch die Antriebsspindel hindurch axiale Schläge auf das Bohr- und Meisselwerkzeug abgibt. Parallel zur Antriebsspindel ist eine weitere mit dem Antriebsmotor in Verbindung bringbare Spindel mit einem Bohrfutter angeordnet, das der Aufnahme eines Bohrwerkzeuges dient, das nur für Bohrarbeiten ohne Schlag verwendet werden kann. Diese weitere Spindel ist mit einer gegenüber der Antriebsspindel höheren Drehzahl antreibbar.

Sowohl mit der Antriebsspindel als auch mit der weiteren Spindel ist jeweils ein Zahnrad drehfest verbunden, wobei das an der Antriebsspindel angeordnete Zahnrad einen grösseren Durchmesser als das Zahnrad an der weiteren Spindel aufweist. Diese beiden Zahnräder sind über ein Getriebe mit einem Abtriebsritzel des Antriebsmotor drehschlüssig verbindbar.

Das Getriebe des Bohr- und Meisselgerätes weist eine parallel zu beiden Spindeln angeordnete Vorgelegewelle mit einem Antriebsritzel auf, das drehschlüssig mit dem Abtriebsritzel des Antriebsmotors zusammenwirkt. Auf der Vorgelegewelle befindet sich ein drehbar gelagerter Taumelantrieb für ein Schlagwerk. Eine mit Hilfe eines Schaltelementes axial versetzbare Schalthülse steht ebenfalls in drehfester Verbindung mit der Vorgelegewelle. Diese Schalthülse besitzt einen umlaufend ausgebildeten Kragen mit einer umlaufend ausgebildeten Nut, in die eine Schaltgabel des Schaltelementes ragt. Über die Schalthülse sind am Bohr- und Meisselgerät zwei verschiedene Betriebsarten eintstellbar, wobei in einer ersten Betriebsart eine erste Verzahnung drehschlüssig mit einer Gegenverzahnung des Taumelantriebs und dem Zahnrad der Antriebsspindel zusammenwirkt. In einer zweiten Betreibsart wirkt die Schalthülse nur mit dem Zahnrad der weiteren Spindel drehschlüssig zusammen.

Als sehr grosser Nachteil wird bei diesem Bohr- und Meisselgerät dessen beschränkte Verwendbarkeit empfunden, da nur zwei verschiedene Betriebsarten einstellbar sind. In einer ersten Betriebsart weist die Antriebsspindel eine niedere Drehzahl und der aktivierte Taumelantrieb eine hohe Taumelfrequenz auf. In einer zweiten Betriebsart weist die Antriebsspindel eine hohe Drehzahl auf und die Taumelantrieb ist nicht aktiviert. Insbesondere eine gute Bohrlochqualität bzw. gute Haltewerte für Befestigungselemente, beispielsweise in Form von Dübeln, in einem Untergrund der beispielsweise aus Hohlblockziegeln besteht, die eine Vielzahl von Hohlkammern aufweisen, sind mit diesem Bohr- und Meisselgerät nicht erreichbar. Der Bohrfortschritt beim Bohren ohne Schlag - zweite Betriebsart - ist sehr langsam und aufgrund der hohen Drehzahl der weiteren Spindel sowie der hohen Reibung zwischen der Bohrerspitze und dem Untergrund kommt es zu einem Ausglühen der Bohrspitze des Bohrwerkzeuges. Ausserdem ist die Schlagstärke bei diesem Bohr- und Meisselgerät nicht veränderbar, so dass bei der Bearbeitung vorgenannter Mauerwerke aus gebrannten Ziegeln damit zu rechnen ist, dass jene Stege, die die Hohlkammern begrenzen, zusammengeschlagen werden, so dass diese der Festlegung der Befestigungselemente nicht mehr dienlich sein können.

Der Erfindung liegt die Aufgabe zugrunde, ein einfach und sicher bedienbares Bohr- und Meisselgerät zu schaffen, das vielseitig verwendbar ist, mit dem ein sehr guter Bohrfortschritt erreichbar ist und bei dem die Schlagenergie bei gleichbleibender Drehzahl an der Antriebsspindel veränderbar ist.

Die Lösung dieser Aufgaben erfolgt mit einem Bohr- und Meisselgerät, welches die im kennzeichnenden Abschnitt des Patentanspruchs 1 angeführten Merkmale aufweist.

Bei dem erfindungsgemässen Bohrgerät sind vier verschiedene Betriebsarten einstellbar:
- erste Betriebsart:: niedere Drehzahl der Antriebsspindel; aktivierter Taumelantrieb mit hoher Taumelfrequenz;
- zweite Betriebsart:: niedere Drehzahl der Antriebsspindel; Taumelantrieb nicht aktiviert;
- dritte Betriebsart:: niedere Drehzahl der Antriebsspindel; aktivierter Taumelantrieb mit niederer Taumelfrequenz;
- vierte Betriebsart:: hohe Drehzahl der Antriebsspindel; Taumelantrieb nicht aktiviert.

Diese Betriebsarten sind mit der gegenüber der Vorgelegewelle axial versetzbaren Schalthülse einstellbar, die mit Hilfe des Schalthebels in vier verschiedene Stellungen entlang der Vorgelegewelle versetzbar ist. Über die beiden Aussenverzahnungen an der Vorgelegewelle wird die Drehbewegung der Vorgelegewelle einerseits direkt auf die Schalthülse, andererseits direkt auf das weitere Zahnrad der Antriebswelle übertragen. Da in der ersten zweiten und dritten Betriebsart die zweite Aussenverzahnung immer in drehschlüssiger Verbindung mit dem weiteren Zahnrad der Antriebsspindel steht, dreht sich die Antriebsspindel in diesen drei verschiedenen Betriebsarten mit einer einheitlichen Drehzahl. Auch eine als Innenverzahnung ausgebildete erste Verzahnung der Schalthülse bleibt in allen drei Betriebsarten in drehschlüssiger Verbindung mit der als Aussenverzahnung ausgebildeten Gegenverzahnung des Taumelantriebes. Damit dies möglich ist, entspricht die axiale Länge der Gegenverzahnung der axialen Länge der ersten Verzahnung und dem Gesamtweg, um den die Schalthülse in einer Richtung versetzbar ist.

Mit Hilfe der Schalthülse wird in der ersten Betriebsart eine drehschlüssige Verbindung zwischen der Vorgelegewelle und dem Taumelantrieb geschaffen. Dabei wirkt eine als Innenverzahnung ausgebildete zweite Verzahnung der Schalthülse mit der ersten Aussenverzahnung der Vorgelegewelle drehschlüssig zusammen. Da die Schalthülse in direkter drehschlüssiger Verbindung mit der Vorgelegewelle steht, sind die Drehzahlen der Vorgelegewelle und des Taumelantriebs gleich hoch. Der Taumelantrieb weist eine hohe Taumelfrequenz auf.

Zum Einstellen der zweiten Betriebsart wird bei dem erfindungsgemässen Bohr- und Meisselgerät die Schalthülse entlang der Vorgelegewelle in Bearbeitungsrichtung um eine Position verschoben. Dabei wird die drehschlüssige Verbindung zwischen der zweiten Verzahnung der Schalthülse und der ersten Aussenverzahnung der Vorgelegewelle getrennt, so dass die Drehbewegung von der Vorgelegewelle nicht mehr auf die Schalthülse und von dieser auf den Taumelantrieb übertragen wird.

Um in der dritten Betriebsart eine kleinere Taumelfrequenz und somit eine geringere Schlagenergie erreichen zu können als in der ersten Betriebsart, ist es notwendig, die Drehzahl des Taumelantriebs zu reduzieren. Dies wird mit Hilfe der Schalthülse erreicht, die in der dritten Betriebsart drehschlüssig mit dem Zahnrad der Antriebsspindel zusammenwirkt. Das weitere Zahnrad der Antriebsspindel steht in drehschlüssiger Verbindung mit der zweiten Aussenverzahnung der Vorgelegewelle. Um eine kleine Drehzahl der Schalthülse erreichen zu können, weist zweckmässigerweise das mit der Vorgelegewelle zusammenwirkende, weitere Zahnrad einen grösseren Durchmesser auf, als das drehschlüssig mit der Schalthülse verbindbare Zahnrad. In der dritten Betriebsart ist die im Innern der Schalthülse angeordnete zweite Verzahnung mit der Vorgelegewelle nicht drehschlüssig verbunden.

Aus herstellungstechnischen Gründen weist vorteilhafterweise die Schalthülse eine mit dem kleineren Zahnrad drehschlüssig in Verbindung bringbare dritte Verzahnung auf.

Um den Schaltweg der Schalthülse so klein wie möglich halten zu können, ist vorteilhafterweise das Zahnrad zwischen dem ersten Zahnrad und der Schalthülse angeordnet.

Damit eine drehschlüssige Verbindung zwischen der ersten Verzahnung der Schalthülse und der ersten Aussenverzahnung der Vorgelegewelle geschaffen werden kann, ist zweckmässigerweise die Aussenverzahnung gleich gross ausgebildet wie die Gegenverzahnung des Taumelantriebs.

Damit die Baulänge des Bohr- und Meisselgerätes möglichst klein gehalten werden kann, sind beide Zahnräder als Baueinheit ausgebildet, bei der beide Zahnräder koaxial zueinander und in einem geringen Abstand voneinander angeordnet sind.

Zum Zwecke der Erreichung einer hohen Drehzahl an der Antriebsspindel in der vierten Betriebsart, ohne dass der Taumelantrieb aktiviert ist, wirken die Vorgelegewelle, die Schalthülse und die Antriebsspindel drehschlüssig zusammen. Damit das grosse Zahnrad der Baueinheit gegenüber der zweiten Aussenverzahnung der Vorgelegewelle ausser Eingriff gebracht werden kann, ist die Baueinheit zweckmässigerweise entlang der Antriebsspindel mit Hilfe des Schaltelementes in Bearbeitungsrichtung gegen die Kraft einer Feder versetzbar.

Ein exaktes Versetzen der Schalthülse entlang der Vorgelegewelle und der beiden Zahnräder entlang der Antriebsspindel wird gewährleistet, indem vorzugsweise das Schaltelement eine Schaltgabel und einen in Bearbeitungsrichtung weisenden Anschlag aufweist, wobei die Schaltgabel in eine Nut eines Kragens der Schalthülse eingreift und der Anschlag mit einer entgegen der Bearbeitungsrichtung weisenden Stirnseite des zweiten Zahnrades in Verbindung bringbar ist. Das Schaltelement steht beispielsweise mit einem ausserhalb des Bohr- und Meisselgerätes betätigbaren Drehknopf in Verbindung, mit dessen Hilfe die vier verschiedenen Betriebsarten einstellbar sind. Zwischen dem Drehknopf und dem Schaltelement ist beispielsweise ein Exzenter angeordnet, der die Drehbewegung des Drehknopfes in eine auf das Schaltelement wirkende Längsbewegung umwandelt.

Die Erfindung wird anhand von Zeichnungen, die ein Ausführungsbeispiel wiedergeben, näher erläutert. Es zeigen:
- Fig.1: ein erfindungsgemässes Getriebe eines Bohr- und Meisselgeräts in einer ersten Betriebsart; niedere Drehzahl der Antriebsspindel, aktivierter Taumelantrieb mit hoher Taumelfrequenz;
- Fig. 2: das Bohr- und Meisselgerät gemäss Fig. 1 in einer zweiten Betriebsart; niedere Drehzahl der Antriebsspindel; Taumelantrieb nicht aktiviert;
- Fig. 3: das Bohr- und Meisselgerät gemäss Fig. 1 in einer dritten Betriebsart; niedere Drehzahl der Antriebsspindel; aktivierter Taumelantrieb mit niederer Taumelfrequenz;
- Fig. 4: das Bohr- und Meisselgerät gemäss Fig. 1 in einer vierten Betriebsart; hohe Drehzahl der Antriebsspindel; Taumelantrieb nicht aktiviert.

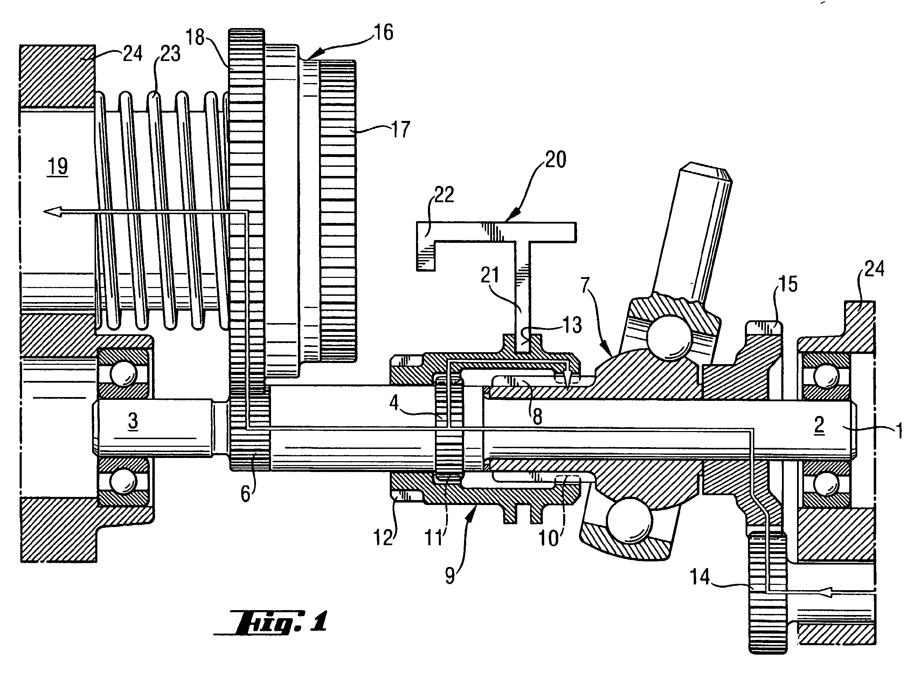

Das in den Fig. 1 bis 4 dargestellte Getriebe eines weiters nicht näher dargestellten Bohr-und Meisselgerätes weist eine Vorgelegewelle 1 auf, die über zwei, sich in den Endbereichen der Vorgelegewelle 1 befindliche Lagerstellen 2, 3 in entsprechenden Gegenlagern eines Gehäuses 24 drehbar gelagert ist. Dem Antrieb der Vorgelegewelle 1 dient ein nicht dargestellter Antriebsmotor, dessen Abtriebsritzel 14 drehschlüssig mit einem Antriebsritzel 15 zusammenwirkt, das drehfest mit der Vorgelegewelle 1 verbunden ist. Ein drehbar auf der Vorgelegewelle 1 gelagerter Taumelantrieb 7 schliesst sich in Bearbeitungsrichtung an das Antriebsritzel 15 an.

Der Taumelantrieb 7 weist in einem bearbeitungsrichtungseitigen Endbereich einen im wesentlichen zylindrisch ausgebildeten Ansatz auf, dessen Aussenkontur mit einer Gegenverzahnung 8 versehen ist. Das Antriebsritzel 15 und der Taumelantrieb 7 befinden sich auf einem ersten Abschnitt der Vorgelegewelle 1, der gegenüber einem zweiten Abschnitt einen geringeren Durchmesser aufweist. Der zweite Abschnitt mit dem grösseren Durchmesser schliesst sich in Bearbeitungsrichtung an den ersten Abschnitt an. Dieser zweite Abschnitt der Vorgelegewelle 1 ist versehen mit zwei Aussenverzahnungen 4, 6, wobei eine erste, dem Taumelantrieb 7 näher liegende Aussenverzahnung, der Gegenverzahnung 8 des Taumelantriebs entspricht.

Eine die Vorgelegewelle 1 umgebende sowie entlang der Vorgelegewelle 1 versetzbare Schalthülse 9 weist in einem entgegen der Bearbeitungsrichtung liegenden Endbereich eine erste Verzahnung 10 in Form einer Innenverzahnung auf, die mit der Gegenverzahnung 8 des Taumelantriebs 7 oder mit der ersten Aussenverzahnung 4 der Vorgelegewelle drehschlüssig in Verbindung bringbar ist. Im Innern weist die Schalthülse 9 eine zweite Verzahnung 11 auf, die der ersten Verzahnung 10 entspricht. Die zweite Verzahnung 11 ist von der ersten Verzahnung 10 beabstandet angeordnet. In einem in Bearbeitungsrichtung weisenden Endbereich ist die Schalthülse 9 mit einer dritten Verzahnung 12 in Form einer Aussenverzahnung versehen. Die Schalthülse 9 ist entlang der Vorgelegewelle 1 mit Hilfe eines Schaltelementes 20 versetzbar. Eine Schaltgabel 21 des Schaltelementes 20 ragt in eine umlaufend ausgebildete Nut 13 eines umlaufend ausgebildeten Kragens der Schalthülse 9. Das Schaltelement 20 ist versehen mit einem in Bearbeitungsrichtung weisenden Anschlag 22, der mit einer entgegen der Bearbeitungsrichtung weisenden Stirnseite eines zwei Zahnräder 17, 18 aufweisenden Bauteiles 16 in Verbindung bringbar ist. Die Versetzung des Schaltelementes 20 erfolgt beispielsweise mittels eines nicht dargestellten Drehknopfes auf der Aussenseite eines Gehäuses 24 des Bohr- und Meisselgerätes, wobei der Drehknopf beispielsweise mittels eines Exzenters mit dem Schaltelement 20 zusammenwirkt.

Parallel zur Vorgelegewelle 1 ist eine Antriebswelle 19 für ein nicht dargestelltes Bohr-und Meisselwerkzeug angeordnet, die in einer entsprechenden Lagerstelle des Gehäuses 24 Aufnahme findet. Koaxial zur Antriebswelle 19 ist ein nicht dargestelltes Schlagwerk angeordnet, das von dem Taumelantrieb 7 antreibbar ist und axiale Schläge auf das mit der Antriebswelle 19 in Verbindung bringbare Bohr- und Meisselwerkzeug abgibt. Mit der Antriebswelle 19 ist das zwei Zahnräder 17, 18 aufweisende Bauteil 16 drehfest verbunden, aber in Bearbeitungsrichtung gegen die Kraft einer Feder 23 entlang der Antriebsspindel 19 versetzbar. Die beiden Zahnräder 17, 18 haben unterschiedliche Durchmesser. Das grössere Zahnrad 18 steht in der ersten, zweiten und dritten Betriebsart drehschlüssig mit der zweiten Aussenverzahnung 6 der Vorgelegewelle 1 in Verbindung.

In der ersten Betriebsart gemäss Fig. 1 erfolgt die Aktivierung des Taumelantriebs 7 mit Hilfe der Schalthülse 9, die mit der ersten Verzahnung 10 drehschlüssig mit der Gegenverzahnung 8 des Taumelantriebs 7 und mit der zweiten Verzahnung 11 drehschlüssig mit der ersten Aussenverzahnung 4 der Vorgelegewelle 1 zusammenwirkt.

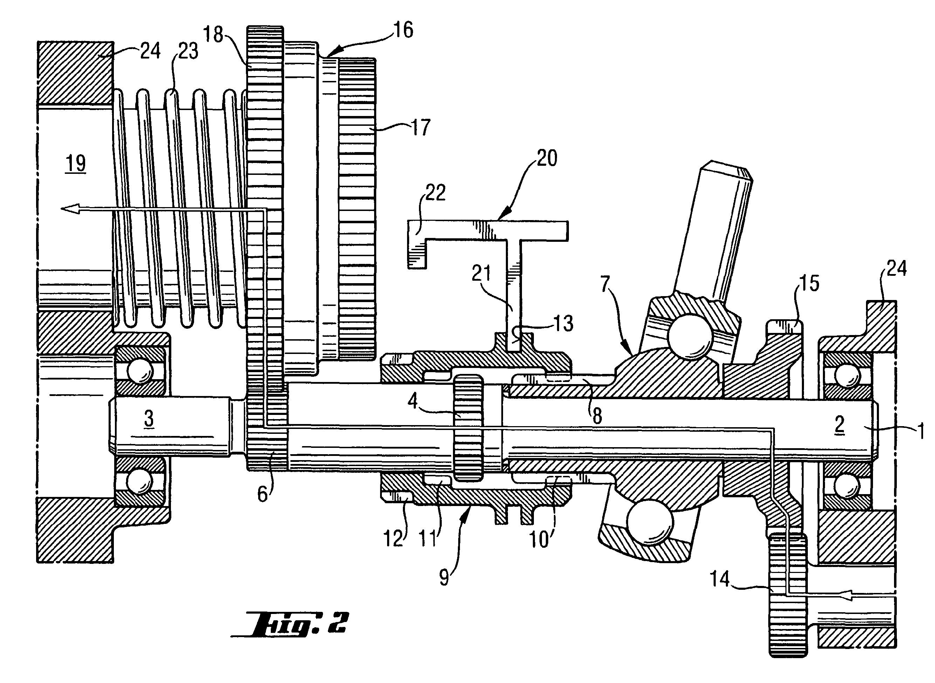

Bei der zweiten Betriebsart gemäss Fig. 2 ist der Taumelantrieb nicht aktiviert, da die zweite Verzahnung 11 mit der ersten Aussenverzahnung 4 nicht mehr in drehschlüssiger Verbindung steht. Die erste Verzahnung 10 der Schalthülse 9 greift zwar noch immer in die Gegenverzahnung 8 des Taumelantriebs 7.

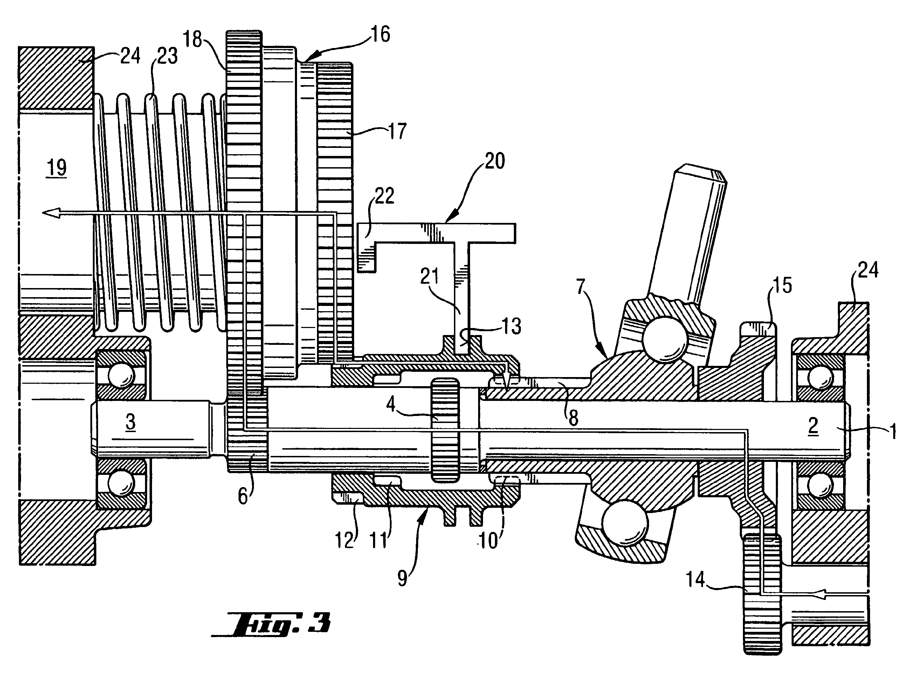

In der dritten Betriebsart gemäss Fig. 3 erfolgt ein Antrieb der Schalthülse 9 über das kleinere Zahnrad 17 der Baueinheit 16, das mit der dritten Verzahnung 12 der Schalthülse 9 drehschlüssig zusammenwirkt. Die erste Verzahnung 10 der Schalthülse 9 wirkt drehschlüssig mit der Gegenverzahnung 8 des Taumelantriebs 7 zusammen. Aufgrund der unterschiedlichen Übersetzungen zwischen der zweiten Aussenverzahnung 6 und dem weiteren Zahnrad 18, sowie zwischen dem Zahnrad 17 und der dritten Verzahnung 12 ist die Drehzahl der auf den Taumelantrieb 7 einwirkenden Drehbewegung kleiner als die Drehzahl der Vorgelegewelle 1. Daraus resultiert eine geringere Taumelfrequenz und somit eine geringere Schlagenergie des Schlagwerks.

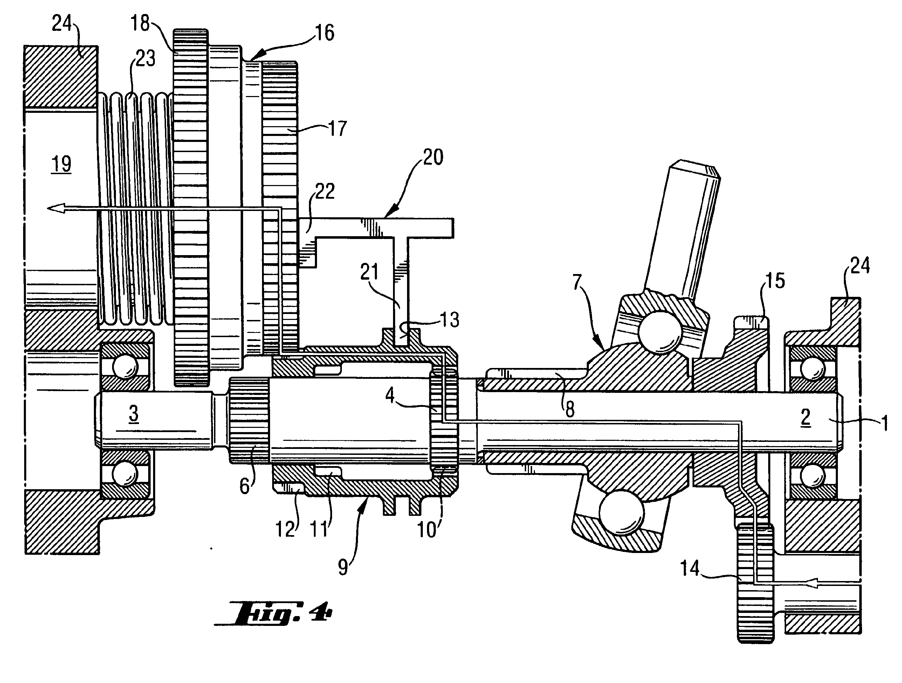

In einer vierten Betriebsart gemäss Fig. 4 ist der Taumelantrieb 7 nicht mehr aktiviert. Die erste Verzahnung 10 der Schalthülse 9 wirkt drehschlüssig mit der ersten Aussenverzahnung 4 der Vorgelegewelle 1 zusammen. Die dritte Verzahnung 12 der Schalthülse 9 steht in drehschlüssiger Verbindung mit dem zweiten Zahnrad 17 und die gesamte Baueinheit 16 wird mit Hilfe des Schaltelementes 20 in Bearbeitungsrichtung gegen die Kraft der Feder 23 verschoben. Das Zahnrad 18 greift nicht in die zweite Aussenverzahnung 6 der Vorgelegewelle 1.

## Patentansprüche

1. Bohr- und Meisselgerät mit einer Antriebsspindel (19) für ein Werkzeug, einer parallel zur Antriebsspindel (19) angeordneten Vorgelegewelle (1), einem mit der Vorgelegewelle (1) drehfest verbundenen Antriebsritzel (15), das drehschlüssig mit einem Abtriebsritzel (14) eines Antriebsmotors zusammenwirkt, einem auf der Vorgelegewelle (1) gelagerten Taumelantrieb (7) für ein Schlagwerk und einer auf der Vorgelegewelle (1) gelagerten, mit Hilfe eines Schaltelementes (20) axial versetzbaren Schalthülse (9), die drehschlüssig mit einem drehfest mit dem Antriebsspindel (19) verbundenen Zahnrad. (17) und mittels einer ersten Verzahnung (10) mit einer entsprechender Gegenverzahnung (8) des Taumelantriebs (7) verbindbar ist, **dadurch gekennzeichnet, dass** die Vorgelegewelle (1) zwei Aussenverzahnungen (4, 6) aufweist, wobei eine erste Aussenverzahnung (4) mit einer zweiten Verzahnung (11) der Schalthülse (9) und eine zweite Aussenverzahnung (6) mit einem drehfest mit der Antriebsspindel (19) verbundenen, weiteren Zahnrad (18) drehschlüssig in Verbindung bringbar ist.

2. Bohr- und Meisselgerät nach Anspruch 1, **dadurch gekennzeichnet, dass** das weitere Zahnrad (18) einen grösseren Durchmesser aufweist als das drehschlüssig mit der Schalthülse (9) verbindbare Zahnrad (17).

3. Bohr- und Meisselgerät nach Anspruch 1 oder 2, **dadurch gekennzeichnet, dass** die Schalthülse (9) zur drehschlüssigen Verbindung zwischen der Schalthülse (9) und dem Zahnrad (17) eine dritte Verzahnung (12) aufweist.

4. Bohr- und Meisselgerät nach Anspruch 3, **dadurch gekennzeichnet, dass** das Zahnrad (17) zwischen dem ersten Zahnrad (18) und der Schalthülse (9) angeordnet ist.

5. Bohr- und Meisselgerät nach einem der Ansprüche 1 bis 4, **dadurch gekennzeichnet, dass** die Aussenverzahnung (4) gleich ausgebildet ist wie die Gegenverzahnung (8) des Taumelantriebs (7).

6. Bohr- und Meisselgerät nach einem der Ansprüche 1 bis 5, **dadurch gekennzeichnet, dass** die beiden Zahnräder (17, 18) als Baueinheit (16) ausgebildet sind.

7. Bohr- und Meisselgerät nach Anspruch 6, **dadurch gekennzeichnet, dass** die Baueinheit (16) entlang der Antriebsspindel (19) mit Hilfe des Schaltelementes (20) in Bearbeitungsrichtung gegen die Kraft einer Feder (23) versetzbar sind.

8. Bohr- und Meisselgerät nach Anspruch 7, **dadurch gekennzeichnet, dass** das Schaltelement (20) eine Schaltgabel (21) und einen in Bearbeitungsrichtung weisenden Anschlag (22) aufweist, wobei die Schaltgabel (21) in eine Nut (13) eines Kragens der Schalthülse (9) eingreift und der Anschlag (22) mit einer entgegen der Bearbeitungsrichtung weisenden Stirnseite der Baueinheit (16) in Verbindung bringbar ist.

## Claims

1. Drilling and chiselling device comprising: a drive spindle (19) for a tool, a countershaft (1) arranged parallel to the drive spindle (19), a drive pinion (15) which is connected in a co-rotational manner with the countershaft (1) and which cooperates in rotational engagement with a power take-off pinion (14) of a drive motor, mounted on said countershaft (1) a wobble drive (7) for a striking mechanism, and also mounted on said countershaft (1), a switching sleeve (9) which can be shifted axially with the help of a switching element (20), can be connected rotationally engaged to a ring gear (17) connected in a co-rotational manner with the drive spindle (19), and which by means of a first set of teeth (10) can be brought into engagement with a corresponding set of mating teeth (8) on said wobble drive (7), **characterised in that** the countershaft (1) incorporates two sets of outer teeth (4, 6): a first set of outer teeth (4) being adapted to be connected rotationally engaged with a second set of teeth (11) of the switching sleeve (9), and a second set of outer teeth (6) being adapted to be rotationally engaged with a second ring gear (18) connected in a co-rotational manner with the drive spindle (19).

2. Drilling and chiselling device according to claim 1, **characterised in that** the second ring gear (18) is larger in diameter than the ring gear (17) adapted to be connected in rotational engagement with the switching sleeve (9).

3. Drilling and chiselling device according to claim 1 or 2, **characterised in that** the switching sleeve (9) has a third set of teeth (12) for effecting rotational engagement between the switching sleeve (9) and the ring gear (17).

4. Drilling and chiselling device according to claim 3, **characterised in that** the ring gear (17) is disposed between the first ring gear (18) and the switching sleeve (9).

5. Drilling and chiselling device according to any one of claims 1 to 4, **characterised in that** the outer set of teeth (4) is constructed identically to the mating set of teeth (8) on the wobble drive (7).

6. Drilling and chiselling device according to any one of claims 1 to 5, **characterised in that** the two ring gears (17, 18) are constructed as one module (16).

7. Drilling and chiselling device according to claim 6, **characterised in that** the module (16) can be axially shifted along the drive spindle (19) by means of the switching element (20) in the working direction counter to the force of a spring (23).

8. Drilling and chiselling device according to claim 7, **characterised in that** the switching element (20) has a selector fork (21) and a stop (22) which faces in the working direction, the selector fork (21) engaging in a groove (13) in a collar of the switching sleeve (9), and the stop (22) being adapted to be brought into engagement with a face of the unit (16) that is directed away from the working direction.

## Revendications

1. Outil de forage et de burinage comprenant une broche d'entraînement (19) pour un outil, un arbre intermédiaire (1) disposé parallèlement à la broche d'entraînement (19), un pignon d'entraînement (15) qui est solidarisé en rotation à l'arbre intermédiaire (1) et qui coopère par liaison en rotation avec un pignon de sortie (14) d'un moteur d'entraînement, un moyen d'entraînement basculant (7) monté sur l'arbre intermédiaire (1) et destiné à un mécanisme de percussion, et un manchon de commutation (9) qui est monté sur l'arbre intermédiaire (1), est déplaçable axialement à l'aide d'un élément de commutation (20) et qui peut être relié par liaison en rotation à une roue dentée (17) solidarisée en rotation à la broche d'entraînement (19) et, par l'intermédiaire d'une première denture (10), à une contre-denture correspondante (8) du moyen d'entraînement basculant (7), **caractérisé en ce que** l'arbre intermédiaire (1) comporte deux dentures extérieures (4, 6), une première denture extérieure (4) apte à être amenée en liaison en rotation avec une deuxième denture (11) du manchon de commutation (9) et une deuxième denture extérieure (6) apte à être amenée en liaison en rotation avec une roue dentée supplémentaire (18) solidarisée en rotation à la broche d'entraînement (19).

2. Outil de forage et de burinage selon la revendication 1, **caractérisé en ce que** la roue dentée supplémentaire (18) présente un diamètre supérieur à celui de la roue dentée (17) apte à être reliée en rotation au manchon de commutation (9).

3. Outil de forage et de burinage selon la revendication 1 ou 2, **caractérisé en ce que**, pour la liaison en rotation entre le manchon de commutation (9) et la roue dentée (17), le manchon de commutation (9) comporte une troisième denture (12).

4. Outil de forage et de burinage selon la revendication 3, **caractérisé en ce que** la roue dentée (17) est disposée entre la première roue dentée (18) et le manchon de commutation (9).

5. Outil de forage et de burinage selon une des revendications 1 à 4, **caractérisé en ce que** la denture extérieure (4) est de conformation identique à la contre-denture (8) du moyen d'entraînement basculant (7).

6. Outil de forage et de burinage selon une des revendications 1 à 5, **caractérisé en ce que** les deux roues dentées (17, 18) forment un ensemble structurel (16).

7. Outil de forage et de burinage selon la revendication 6, **caractérisé en ce que** l'ensemble structurel (16) est déplaçable le long de la broche d'entraînement (19) à l'aide de l'élément de commutation (20) dans une direction de travail orientée à l'opposé de la force d'un ressort (23).

8. Outil de forage et de burinage selon la revendication 7, **caractérisé en ce que** l'élément de commutation (20) comporte une fourchette de commutation (21) et une butée (22) orientée dans la direction de travail, la fourchette de commutation (21) s'engageant dans une rainure (13) d'un collet du manchon de commutation (9), et la butée (22) pouvant être amenée en liaison avec un côté frontal de l'ensemble structurel (16) orienté à l'opposé de la direction de travail.
